(19) Europäisches Patentamt
European Patent Office
Office européen des brevets

(11) **EP 4 477 332 A1**

(12) **EUROPEAN PATENT APPLICATION**

(43) Date of publication:
**18.12.2024 Bulletin 2024/51**

(21) Application number: **24177436.3**

(22) Date of filing: **22.05.2024**

(51) International Patent Classification (IPC):
**B21B 37/16** (2006.01)   **B21B 37/28** (2006.01)
**B21B 38/02** (2006.01)   **B21B 38/04** (2006.01)
**B23Q 15/12** (2006.01)

(52) Cooperative Patent Classification (CPC):
**B21B 37/28; B21B 37/16; B21B 37/32;**
B21B 38/02; B21B 38/04; B23Q 15/12;
G05B 2219/45234

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.06.2023 US 202318209147**

(71) Applicant: **Honeywell International Inc.
Charlotte, NC 28202 (US)**
(72) Inventors:
• **BHAT, Dattaraj**
  **Charlotte, 28202 (US)**
• **GUPTA, Shailendra Kumar**
  **Charlotte, 28202 (US)**

(74) Representative: **Houghton, Mark Phillip
Patent Outsourcing Limited
1 King Street
Bakewell, Derbyshire DE45 1DZ (GB)**

(54) **MODEL BASED MULTI-VARIABLE PREDICTIVE CONTROL FOR METAL ROLLING MILLS**

(57)    A control system employs a model-based multi-variable predictive control for cold rolling mills to improve sheet thickness uniformity to meet or exceed specifications in flatness. Sheet metal thickness and flatness deviations from standard requirements are significantly reduced with attendant improved control accuracy as compared to traditional control approaches that use PID based closed loop controls. The control system is particularly suited for control of 4-hi non-reversible single-stand metal rolling mills. The mill stand has a first work roll and a second work roll respectively positioned between a first back up roll and a second back up roll. A plurality of sensors measures and acquires property data of the sheet of material. A model predictive controller manipulates actuators to regulate thickness and flatness. The controller executes automatic gauge control, which is machine direction metal control, and automatic flatness control, which is cross direction metal sheet control, as metal sheet is rolled.

EP 4 477 332 A1

**FIG. 1**

**Description**

FIELD OF THE INVENTION

The present invention is directed to control of metal rolling mills and, in particular, to model-based multi-variable predictive controls for automatic gauge control and automatic flatness control, such as, for 4-hi non-reversible single-stand metal rolling mills.

BACKGROUND OF THE INVENTION

In cold rolling, a sheet of metal material is reduced in gauge, or thickness, by passing a metal strip between rolling cylindrical surfaces under applied pressure. A typical single-stand rolling mill feeds the material from an unwind reel to a rewind reel. The metal strip is passed in between work rolls acted upon by respective backup rolls. A force is applied to at least one of the backup rolls. Then, the rolling mill produces a coil of sheet at a thinner and constant gauge.

Centerline thickness (gauge) deviation is an important key performance indicator in a metal rolling application. Many challenges exist in design of robust, yet high performance, thickness control strategies. Challenges range from the presence of varying time delays between the mill stand and measurement device to significant non-linearities across the operating range. Furthermore, the requirement of fast disturbance rejection of measured disturbances, such as entry thickness and entry speed, or unmeasured internal disturbances, such as roll eccentricity, thermal growth, and thermo-mechanical wear of work rolls presents an ongoing challenge.

Current gauge and flatness in aluminum rolling may employ proportional-integral-derivative (PID) based closed loop controls. The product optimization time required to achieve acceptable results is relatively high. The gauge and flatness controls during acceleration/deceleration states of rolling is also not the same as that during stable running states.

SUMMARY OF THE INVENTION

The present invention is based on development of a control system that employs a model-based multi-variable predictive control for cold rolling mills to improve sheet thickness uniformity to meet or exceed specifications in flatness. Sheet metal thickness and flatness deviations from standard requirements may be significantly reduced with attendant improved control accuracy as compared to traditional control approaches that use PID based closed loop controls. The invention is suited for control of 4-hi non-reversible single-stand metal rolling mills.

In one embodiment, the invention is directed to a system of controlling the thickness and flatness of sheet metal in a mill exiting a stand comprising a first work roll and a second work roll respectively positioned between a first back up roll and a second back up roll. The sheet metal moves in a machine direction. A plurality of sensors measures and acquires property data of the sheet of material. A model predictive controller (MPC) manipulates actuators to regulate thickness and flatness. The controller executes automatic gauge control (AGC) and automatic flatness control (AFC) as metal sheet is rolled. AGC refers to machine direction metal sheet control and AFC refers to cross direction metal sheet control, nominally perpendicular to the machine direction.

In one aspect, the invention is directed to a controller for controlling thickness and flatness of sheet metal in a mill exiting a roll stand comprising a first work roll and a second work roll respectively positioned between a first back up roll and a second back up roll, the controller comprising a processor and code stored on media readable by the processor to control the thickness of the sheet metal, the controller including:

an input comprising the thickness and the flatness of the sheet metal;
a model of the roll stand;
a filter based on the model; and
a controller output coupled to control a roll gap between the first work roll and the second a work roll, a roll force, a mill speed and/or strip tension to produce the sheet metal.

In another aspect, the invention is directed to a method of programming a controller for automatically controlling thickness and flatness of sheet metal produced by a roll stand, the method including:

generating a model of the roll stand, the model being multivariable and predictive;
receiving input comprising variations in the thickness and flatness of the sheet metal;
generating a filter based on the model; and
automatically adjusting parameters of the filter based on the input to control of the thickness and flatness of the sheet metal produced by the roll stand.

In a further aspect, the invention is directed to a controller for controlling thickness and flatness of sheet metal exiting a roll stand having a first work roll and a second work roll including:

    a processor;
    means of determining the thickness of the sheet metal exiting the roll stand;
    means of determining the flatness of the sheet metal exiting the roll stand;
    a memory device coupled to the processor and comprising a readable program for execution by the processor to:

        receive an input comprising variations in the thickness and flatness of the sheet metal;
        generate a model of the roll stand;
        execute a filter based on the model; and
        provide an output coupled to control a roll gap between the first work roll and the second a work roll, a roll force, a mill speed and/or a strip tension.

BRIEF DESCRIPTION OF THE DRAWINGS

    FIG. 1 illustrates a sheet metal cold rolling mill system;
    FIG. 2 illustrates a sheet metal cold rolling mill with automatic gauge control;
    FIG. 3 illustrates a sheet metal cold rolling mill with automatic flatness control;
    FIG. 4 is a perspective of the sheet metal rolling mill system;
    FIG. 5 is a cross sectional view of a mill;
    FIG. 6 is a block diagram illustrating the operation of the controller;
    FIG. 7 is a block diagram of a closed-loop MPC system;
    FIG. 8 illustrates a computer system to implement a controller; and
    FIG. 9 illustrates a flow diagram of an inventive method.

DETAILED DESCRIPTION OF PREFERRED EMBODIMENTS

Various embodiments will be described of a present claimed invention of an apparatus of, and a method for, a metal rolling mill system to control thickness and flatness of sheet metal, such as, produced in a 4-hi stand cold rolling mill taken as a base reference (4-hi-mill). However, it is understood the invention is applicable to other cold rolling mill arrangements.

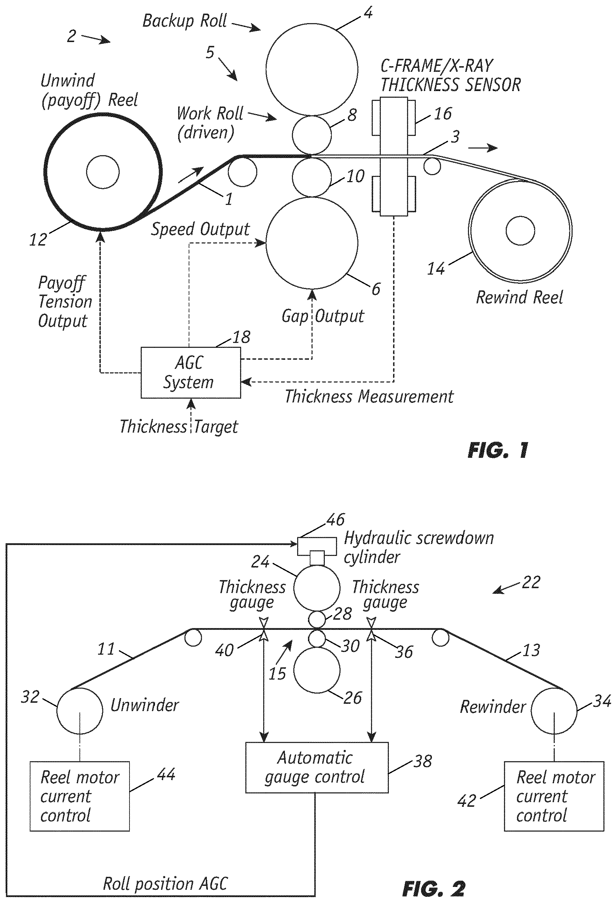

Fig. 1 illustrates a metal rolling mill system 2 providing thickness control. A rolling mill stand may include four, or more, rolls stacked and mounted vertically, such as, two smaller diameter work rolls 8,10, each in contact with a separately mounted larger-diameter backup roll 4,6. Incoming metal strip or work piece 1 is supplied by an unwind (payoff) stand 12 of material that is reduced to a thickness through a multiplicity of rolls 4, 8, 10, and 6 that comprises top backup roll 4, top work roll 8, bottom work roll 10, and bottom backup roll 6 (referred to collectively as a 4-hi stand 5). The metal strip 1 may be ferrous and/or non-ferrous, such as steel, aluminum, or the like. The metal strip has an entry tension which is controlled by regulating respective speeds of an uncoiler and a coiler. The metal strip 1 passes through a roll gap between a pair of work rolls 8, 10 and exits the roll gap as strip 3 with a strip speed. The average gauge is the average thickness of the strip 3 between the two work rolls 8,10. Roll slip refers to a difference in speeds between top work roll 8 and bottom work roll 10. The mill speed which is the speed of the main mill motor which is connected to the work rolls. A C-frame/X-ray thickness sensor 16 measures the thickness of strip 3 which exits from the 4-hi stand before it is collected by a rewind stand 14. An automatic gauge control (AGC) system 18 receives thickness measurements (from the x-ray sensor 16) and thickness targets (such as, from an operator) and transmits separate signals of gap output, speed output, and payoff tension output.

Fig. 2 depicts a metal rolling system 22 showing a gap positioning mechanism wherein incoming metal strip 11, supplied from left reel 32, passes through a roll gap of a 4-hi stand 15 that comprises top backup roll 24, top work roll 28, bottom work roll 30, and bottom backup roll 26. Thickness gauge 40 and thickness gauge 36, respectively, measure thickness of entry strip 11 and exit strip 13 before the exit strip 13 is collected into a right reel 34. Reel motor current controls 44 and reel motor current control 42, respectively, regulate the left reel 32 and the right reel 34. The 4-hi stand is equipped with a gap positioning system 46, which may be mechanical, hydraulic, or a combination of both. The gap positioning system 46, which can vary the work roll gap, includes a pair of screwdown motors or hydraulic cylinders, each equipped with a screwdown or screw which clamps against opposite ends of backup rolls 24, 26, respectively, to apply roll force (pressure) to work rolls 28, 30. An outgoing thickness of strip 13, such as, at a centerline, is regulated as closely as appropriate to a target thickness. An automatic gauge control system 38 receives thickness measurements from the strip thickness sensors 40, 36 and transmits signals to hydraulic screwdown cylinder 46.

A model-based multivariable predictive controller (MPC) of the present claimed invention includes a multi-variable controller that manipulates four actuators for automatic gauge control (AGC) to regulate: (1) roll gap, (2) roll force, (3) entry tension, and (4) mill speed. The multi-variable controller also manipulates three actuators to regulate: (5) coolant or oil spray, (6) tilt control (differential gap or differential load), and (7) bending control, for automatic flatness control (AFC). The differential gap is the difference between the drive side and non-drive side roll gap. The differential load/force is the difference between the drive side and non-drive side roll forces. Bending control adjusts flatness among the (such as, three) actuators.

Automatic Gauge Control (AGC) The term "AGC" or "Gauge Control" refers to control of the machine-directional thickness in metal. The feedback is supplied by one or more fixed-point sensors.

Work roll positioning is effective in heavier passes where ends of rolls are not in contact as would be the case in light foil rolling. Within working range for a particular coil, exit strip thickness is directly related to roll gap opening. For lighter passes, roll gap opening may not be readily changed because ends of the rolls are in contact.

Mill speed is effective for AGC actuation for foil passes where the foil film thickness (decreases as speed increases) may substantially affect strip thickness. Mill speed is set by mill operator and is translated to work roll angular velocity. Payoff tension is most effective for foil and light sheet. A control mode is selected (such as, by a mill operator) before starting mill rolling.

Roll Gap and Force Control: Closed-loop control of gauge or thickness via roll gap and force control setpoints, used on heavier passes in mills that have closed-loop roll positioning system with roll position and pressure feedback. This control makes an output to gap control system (such as, hydraulic system) to adjust roll position and force control in mill stack.

Tension Control: Close-loop control of thickness via payoff strip (entry) tension. This control makes an output to mill drive system to adjust armature current to payoff motors. Actual strip tension may be measured, or computed, in specific tension units (e.g., psi, $kN/m^2$), but occasionally the armature current is treated as if it is directly proportional to absolute tension (amps).

Mill speed and roll speed control: The output is supplied to the mill drive system to adjust mill speed and control speed of work rolls 28, 30 of the mill.

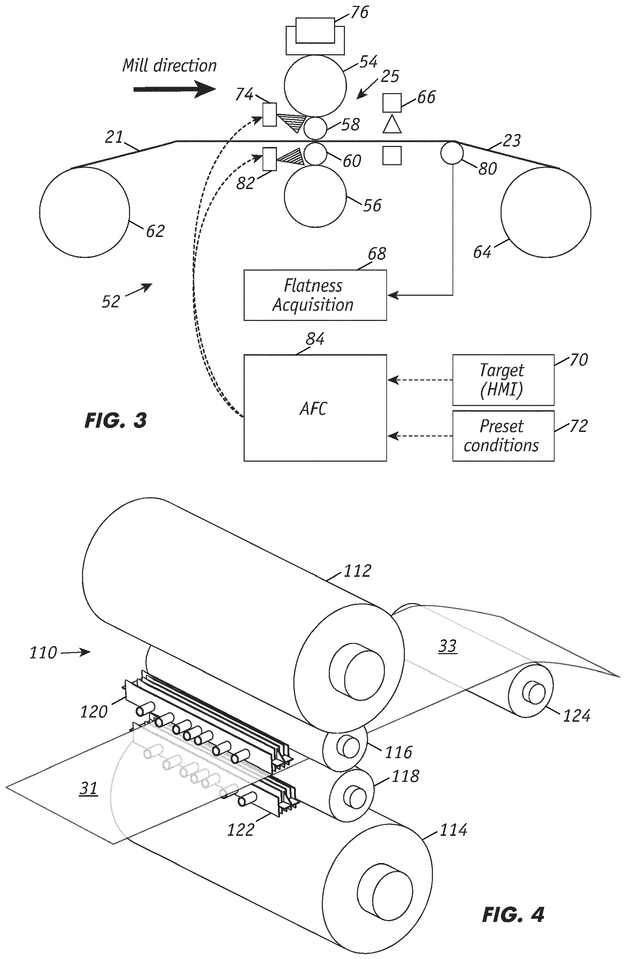

Fig. 3 depicts a metal rolling system 52 comprising flatness control wherein incoming metal strip 21, from left reel 62, passes through a 4-hi stand 25 comprising top backup roll 54, top work roll 58, bottom work roll 60, and bottom backup roll 56. Thickness gauge 66 measures thickness of strip 23 before being collected onto right reel 64. Reel motor current controls 44, 42 (not shown), respectively, regulate the drives of left and right reels 62, 64. The 4-hi stand is equipped with gap positioning system 76, which may be mechanical, hydraulic, or a combination of both. The gap positioning system 76, which can vary the work roll gap, includes two screwdown motors (not shown), each equipped with a screwdown or screw which clamps against opposite ends of two backup rolls 54, 56, respectively, to apply roll force (pressure) to work rolls 58, 60. The screw position actively adjusts roll gap. A plurality of nozzles 74 spray coolant or oil onto work roll 58 and a plurality of nozzles 82 spray coolant or oil onto work roll 60. A flatness sensor roll 80 measures flatness of exit strip 23 and generates flatness acquisition signals. An Automatic Flatness Control 84 receives, and compares, inputs, including, target 70, such as, from a Human-Machine Interface (HMI), and preset conditions 72, such as, from an operator (not shown).

Fig. 4 shows a 4-hi stand 110 that comprises top backup roll 112, top work roll 116, bottom work roll 118, and bottom backup roll 114. Elongated upper and lower coolant or oil, distribution systems 120, 122, respectively, are positioned adjacent to top work roll 116 and bottom work roll 118. Each distribution system has a plurality of nozzles on the interior side facing the 4-hi stand to spray coolant or oil along the length of the work roll. Typically, each distribution system 120, 122 has 20 to 60 active nozzles along its length which can provide spray coolant or oil for stable temperature control of work rolls 116, 118, respectively. In addition, the spray nozzles provide zoned selective cooling along length of work rolls 116, 118. The 4-hi stand is equipped with flatness sensor roll 124 comprising plurality of active rotors which typically ranges from 20 to 60 active rotors.

In particular, there is a total number of zones in a shapemeter (comprising individual sensors or rotors) and spray bar distribution system 120, 122 (comprising individual spray nozzles). Based on the actual strip width of the sheet actually rolling at that particular pass, only certain number of rotors and spray nozzles are covered by the sheet. These rotor and spray zones which are covered by the rolling strip in a particular pass are called N active/used rotors/zones with M cooling spray nozzles. Only these active/used zones are used for flatness control. Typically, N is equal to M.

As an example, if there are 30 rotors (in the shapemeter) and spray nozzles each in a rolling mill with individual width zone width of 50 mm, the maximum width of the metal strip that can be rolled in this particular mill is 30 x 50 = 1500 mm. For a pass if the metal strip width is 1200 mm, only 24 zones of rotors (in the shapemeter) and spray nozzles are actively covered. Therefore, the first 3 and last 3 zones of rotors and spray nozzles are outside the strip or uncovered. In this example, N active/used rotors/zones with M cooling spray nozzles are 24 zones.

The present claimed invention envisions many embodiments. The system may cool or heat. The spray coolant may be oil-based or water-based. The configuration may include multiple zones or rows of spray nozzles. The spray nozzles, or valves, may be arranged in single, double, or triple overlapping, or staggered, rows. The spray coolant may include a continuous (such as, a constant flowrate) mode or a pulsing mode. Shapemeters may be included, or excluded, to provide profile inputs. Spray zone widths, such as 25 mm and larger, may allow adjustments of impact, spray angle, and drop size.

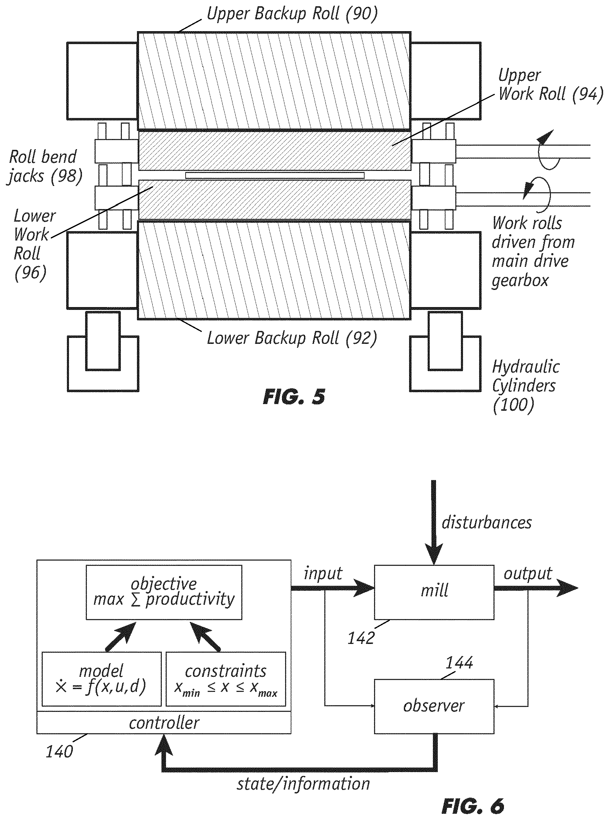

Fig. 5 shows the arrangement of a 4-hi stand which includes upper backup roll 90, upper work roll 94, lower work roll 96, and lower backup roll 92. Work rolls 94, 96 are driven from a main drive gearbox as a metal strip passes through a roll gap that is between a pair of work rolls 94, 96. Roll bend jacks 98 and hydraulic cylinders 100 are responsible for the roll gap and roll force using a combination of thermal and mechanical actuators (not shown).

<u>Automatic Flatness Control (AFC):</u> Automatic Flatness Control (or Shape Control) refers to cross-directional measurement and control of metal strip flatness. Measurement of flatness (or shape) provides representation of variations in length, which may result when strip thickness reduction on any part of the metal varies from one point to another across the sheet. The control of the strip flatness is accomplished through a combination of thermal and mechanical actuators.

Sprays or Nozzle Control: Cooling sprays are used for fine adjustments of localized flatness errors across the strip. The effect is a result of the cooling that takes place in the work rolls due to removal of heat by the rolling oil, or water, sprayed at (such as, regular or periodic) intervals across an active rolling surface on an entry side of work rolls. The cooling sprays will have separate banks of spray nozzles for top and bottom work rolls. Each of these may in turn have one, two, or three nozzles of different sizes.

Bending: Bending in a mill is controlled by hydraulic actuators, which are present on both sides of the mill. The actuators act between the bearing blocks for the work rolls. Positive bend is achieved when actuators are moved between the work roll bearing blocks. This increases the work roll crown, that is reduces the distance between the work rolls at the center of the mill for the same edge of roll gap setting. Negative bend reduces the work roll crown, which increases the distance between the work roll at the center of the mill for the same edge of roll gap setting.

Tilt: Tilt control operates to eliminate any side-to-side differences in the shape profile. Lateral (side-to-side, cross-directional) difference in roll gap or rolling load used to control linear component of strip flatness.

Fig. 6 depicts an apparatus comprising a model-based multi-variable predictive controller in various embodiments of the present claimed invention. An observer 144 monitors, such as compares, a latest input and a latest output of a mill 142 to detect presence, size, and consequences of latest disturbances. Then, the observer 144 supplies latest state/information to a controller 140. The controller 140 uses a latest model of a function f (x, u, d) and latest constraints between a specified x minimum and a specified x maximum to achieve a latest objective of maximum summed productivity. Then, the controller 140 supplies latest input to the mill 142 to compensate for latest disturbances to accomplish latest output, as desired. The feedback continues. For example, the observer 144 supplies latest state/information to confirm, or deny, validity of the latest input supplied by the controller 140.

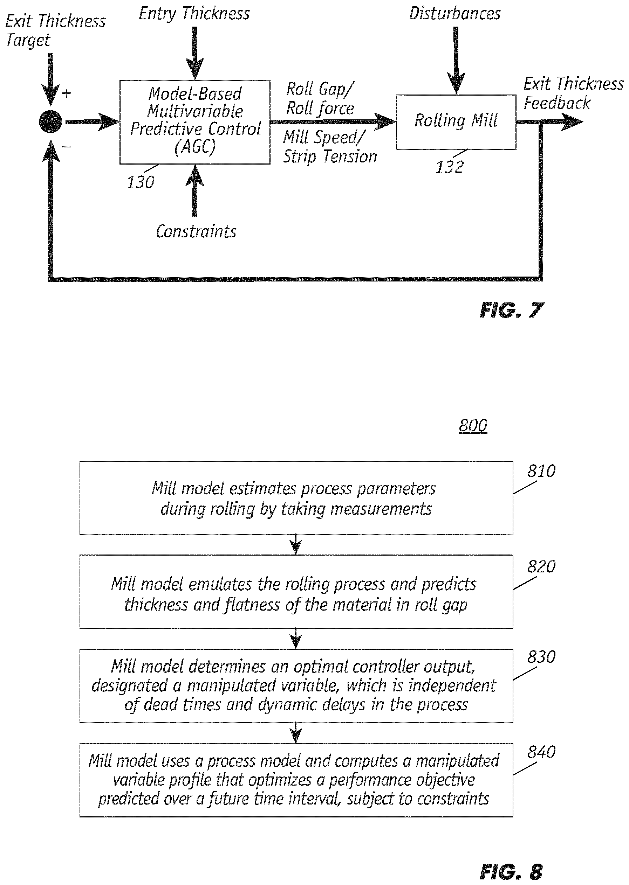

Fig. 7 depicts a method comprising model-based multi-variable predictive control (AGC) in various embodiments of the present claimed invention. An exit thickness target, an entry thickness, and constraints are all supplied to a model-based multi-variable predictive control (AGC) 130. The AGC 130 supplies latest roll gap/roll force and latest mill speed/strip tension to a rolling mill 132. Disturbances may affect the rolling mill 132. A latest exit thickness feedback is compared with the exit thickness target and a new exit thickness error is calculated which is later, together with entry thickness and constraints, supplied to AGC 130.

The MPC of the present invention employs various models for controller design. The models are derived from bump tests. The mill may be subject to bump tests by intentionally disturbing selected actuators and detecting their responses, typically with the control system in open-loop. The term bump test refers to a procedure whereby an operating parameter on the mill, such as actuator setpoints of the mill, is altered and changes of certain dependent variables resulting therefrom are measured. After the mill has reached steady state or stable operation, certain operating parameters are measured and recorded. Sufficient number of measurements over a length of time is taken to provide representative data of the responses to the bump test.

For example, a bump test in the roll gap/position may alter the sheet thickness with which one can derive the response/relationship between these two variables with respect to that specific system/field devices. Similarly, a bump test in the spray or roll bend will impact flatness of a sheet.

<u>MPC for Automatic Gauge Control</u>

This section describes model-based multi-variable predictive controller, MPC, for Automatic Gauge Control (AGC). The following models are used for controller design according to embodiments of the presently claimed invention. The models for Roll Gap, Total Load (roll force), Strip Tension, and Mill Speed are derived from, and tuned with, bump test data.

$$G_{p,gap} \quad = \quad \frac{680.5}{0.03s + 1} e^{-0.03s} \quad (1)$$

$$G_{p,load} = \frac{-3.24}{0.1s + 1} e^{-0.03s} \quad (2)$$

$$G_{p,tension} = \frac{-0.0066}{0.01s + 1} \; 10 \quad (3)$$

$$G_{p,speed} = \frac{-0.0388}{0.01s + 1} \quad (4)$$

$$G_{d,entrygauge} = \frac{0.43}{0.005s + 1} e^{-0.5s} \quad (5)$$

$$G_{d,rewindtension} = \frac{-0.0062}{0.01s + 1} \quad (6)$$

The transfer function for a pure time delay is $e^{-qs}$, where q is a time delay. Some control system design techniques require a rational transfer function for dynamic behavior, in which case, a Padé approximation for dead time may be used.

A first-order approximation has an inverse response with a single positive zero. A second-order approximation has a double inverse response with two positive complex-conjugate zeros of the numerator transfer function.

Most ordinary differential equation numerical integrators require pure differential equations with no time delays. In a system of differential equations with time delays, the Padé approximation may be used to convert them to delay-free differential equations so they can be numerically integrated.

Firstly, the delay is approximated by a second order Pade's formula to get a rational transfer function. Then this continuous-time transfer function is converted into a discrete time transfer function and subsequently converted into state space model of the following form:

$$x(k + 1) = A_p x(k) + B_p u(k) + B_d d(k)$$
$$y(k) = C_p x(k) \quad (7)$$

where k is a discrete-time sampling instant, $u(k)$ is the vector of manipulable inputs and $d(k)$ is the vector of disturbance inputs. The response of the real mill may not exactly follow this model. In order to incorporate this plant/model mismatch, innovation-bias approach is used. An innovation signal ($e(k)$) is computed as a difference between the actual and predicted output. A filtered version of this innovation signal ($e_f(k)$) is used to correct the prediction equation as follows.

$$x(k + 1) = A_p x(k) + B_p u(k) + B_d d(k) + L e_f(k)$$
$$y(k + 1) = C_p x(k + 1) + e_f(k)$$
$$e(k) = y_{act}(k) - C_p x(k)$$
$$e_f(k) = \Phi_e e_f(k - 1) + (I - \Phi_e)e(k) \quad (8)$$

where $y_{act}(k)$ is the actual output, L is a Kalman predictor gain and $\Phi_e$ is a filter constant matrix (diagonal matrix with each value between 0 and 1). I is the identity matrix.

A Kalman filter is an optimal filter so we want a Kalman gain which minimizes the estimate variance. To minimize an estimate variance, we minimize a main diagonal (from the upper left to the lower right) of the covariance matrix.

Based on this prediction model, a state feedback MPC controller is designed. Firstly, this model is represented in a difference form. Instead of using $x(k)$, $u(k)$, $d(k)$ and $e_f(k)$ as states, inputs, disturbances and innovations, respectively, we use $\Delta x(k + 1) = x(k + 1) - x(k)$, $\Delta u(k) = u(k) - u(k - 1)$, $\Delta d(k) = d(k) - d(k - 1)$ and $\Delta e_f(k) = e_f(k) - e_f(k -1)$ as states, inputs, disturbances and innovations, respectively. Using this transformation, our model becomes:

$$\begin{bmatrix} \Delta x(k+1) \\ y(k+1) \end{bmatrix} = \begin{bmatrix} A_p & 0 \\ C_p A_p & 1 \end{bmatrix} \begin{bmatrix} \Delta x(k) \\ y(k) \end{bmatrix} + \begin{bmatrix} B_p \\ C_p B_p \end{bmatrix} \Delta u(k) + \begin{bmatrix} B_d \\ C_p B_d \end{bmatrix} \Delta d(k)$$

$$+ \begin{bmatrix} L \\ C_p L + I \end{bmatrix} \Delta e_f(k)$$

$$y(k+1) = \begin{bmatrix} 0 & 1 \end{bmatrix} \begin{bmatrix} \Delta x(k) \\ y(k) \end{bmatrix} \tag{9}$$

which is an augmented state system of the form (7) and can be represented as follows:

$$X(k+1) = A_e X(k) + B_e \Delta u(k) + B_{de} \Delta d(k) + L_e \Delta e_f(k)$$

$$Y(k) = C_e X(k) \tag{10}$$

MPC will use this model for prediction of states. There are two important controller parameters here. Prediction horizon (Np) specifies the number of future time instances up to which the controller would make predictions. The larger the prediction horizon, better are the closed-loop results. However, this will result in larger computational time. Similarly, control horizon (Nc) specifies the number of future inputs used to optimize the controller performance criteria. Typically, Nc is much smaller than Np. Using these two parameters and starting state $x(ki)$, disturbance $d(ki)$ and actual output $y_{act}(ki)$, output prediction can be represented as follows:

$$Y_p = Fx(ki) + \Phi \Delta U + \Gamma \Delta d(ki) + \Gamma_e \Delta e_f(ki) \tag{11}$$

where,

$$Y_p = \begin{bmatrix} Y(ki+1|ki) & Y(ki+2|ki) & \cdots & Y(ki+Np|ki) \end{bmatrix}^T \tag{12}$$

are the future Np output predictions based on the current state $X(ki)$.

$$\Delta U = \begin{bmatrix} \Delta u(ki) & \Delta u(ki+1) & \cdots & \Delta u(ki+Nc-1) \end{bmatrix}^T \tag{13}$$

are the planned next Nc control moves. Accordingly,

$$F = \begin{bmatrix} C_e A_e \\ C_e A_e^2 \\ \vdots \\ C_e A_e^{Np} \end{bmatrix} \tag{14}$$

$$\Phi = \begin{bmatrix} C_e B_e & 0 & 0 & \cdots & 0 \\ C_e A_e B_e & C_e B_e & 0 & \cdots & 0 \\ C_e A_e^2 B_e & C_e A_e B_e & C_e B_e & \cdots & 0 \\ \vdots & \vdots & \vdots & \ddots & \vdots \\ C_e A_e^{Np-1} B_e & C_e A_e^{Np-2} B_e & C_e A_e^{Np-3} B_e & \cdots & C_e A_e^{Np-Nc} B_e \end{bmatrix} \tag{15}$$

$$\Gamma = \begin{bmatrix} C_e B_{de} \\ C_e A_e B_{de} \\ C_e A_e^2 B_{de} \\ \vdots \\ C_e A_e^{Np-1} B_{de} \end{bmatrix} \tag{16}$$

$$\Gamma_e = \begin{bmatrix} C_e L_e \\ C_e A_e L_e \\ C_e A_e^2 L_e \\ \vdots \\ C_e A_e^{Np-1} L_e \end{bmatrix} \tag{17}$$

Let us consider MPC objective function $J$ as a combination of control error and control action. Specifically,

$$J = (R_s - Y_p)^T (R_s - Y_p) + \Delta U^T \bar{R} \, \Delta U \tag{18}$$

where $R_s$ is a set point trajectory along the prediction horizon and $\bar{R}$ is a vector capturing weight on input change and is a tuning parameter. A high value of an element in $\bar{R}$ means a strong penalty on input move and thus there will be gradual variation in input as we move from one time instant to the next. On the other hand, if $\bar{R} \to 0$, then controller simply focusses on error. Substituting for $Y_p$ from (11), we can represent $J$ in the following quadratic form:

$$J = \frac{1}{2} \Delta U^T \left( \Phi^T \Phi + \bar{R} \right) \Delta U - \Delta U^T \Phi^T \left( R_s - FX(ki) - \Gamma \Delta d(ki) - \Gamma_e \Delta e_f(ki) \right)$$
$$+ constant \tag{19}$$

MPC will minimize this objective function subject to constraints and compute input move vector $\Delta U$. The constant term can be neglected as it doesn't affect the optimal solution. We can have constraints on actual input as well as input change. As the receding horizon MPC uses only the first input $u(ki)$, the other future (Nc-1) input values will be discarded. We can therefore include constraints only on the first move. This reduces computational effort. So there are total 4 constraints; min and max input value constraint ($u_{min} \leq u(ki) \leq u_{max}$), and min and max input change constraint ($\Delta u_{min} \leq \Delta u(ki) \leq \Delta u_{max}$). At any time instance $ki$, these can be represented as follows:

$$-\Delta u(ki) \leq -u_{min} + u(ki - 1) \tag{20}$$

$$\Delta u(ki) \leq u_{max} - u(ki - 1) \tag{21}$$

$$-\Delta u(ki) \leq -\Delta u_{min} \tag{22}$$

$$\Delta u(ki) \leq \Delta u_{max} \tag{23}$$

Note that the first two constraints depend on the previous input value and thus would be updated as we move along time. These constraints can be written in the following matrix form:

$$A_{con} \Delta U \leq b \tag{24}$$

So, at any time instance $ki$, the MPC is going to solve the following constrained optimization problem:

$$min_{\Delta U} J_q = \frac{1}{2}\Delta U^T \left(\Phi^T \Phi + \bar{R}\right)\Delta U - \Delta U^T \Phi^T \left(R_s - FX(ki)-\right.$$
$$\left.\Gamma\Delta d(ki) - \Gamma_e \Delta e_f(ki)\right)$$

subject to $A_{con}\Delta U \leq b$ \hfill (25)

which is a quadratic programming problem. It can be solved using Hildreth's quadratic programming algorithm. It can be noted that the optimal solution $\Delta U_{opt}$ depends on the current state $x(ki)$, disturbance measurement $d(ki)$ and innovation signal $e_f(ki)$. Out of this optimal solution, only the first entry $\Delta u_{opt}(ki)$ would be sent to the process. The controller then waits till the next time instance $(ki+1)$ and repeats all these calculations based on the updated state feedback vector $x(ki + 1)$, disturbance $d(ki + 1)$ and actual output $y_{act}(ki + 1)$ from the system. MPC is a state feedback controller. However, all these states need not be measurable. For our case, fictitious and thus unmeasurable states are introduced due to Pade's approximation of the delay. We therefore need a state estimator (also known as an observer) which would reconstruct these states from output measurement. Here, we have used Kalman filter-based observer. The observer model can be constructed from the process model as shown below:

$$\hat{x}(k + 1) = A_p\hat{x}(k) + B_p u(k) + B_d d(k) + K_{ob}\left(y_{act}(k) - C_p\hat{x}(k)\right) \hspace{1cm} (26)$$

where $\hat{x}(k + 1)$ is an estimate of the actual state $x(k + 1)$. It can be seen that the first part of the observer model is same as the process model given in Eq. (7). The second part is a feedback correction term, based on actual measurement $y_{act}(k)$, required to converge these estimates to the actual state values. The observer gain $K_{ob}$ is selected based on stationary Kalman filter formulation. Specifically, if variance in $i^{th}$ disturbance is $\sigma_d(i)$ and variance in $j^{th}$ output is $\sigma_y(j)$, we have:

$$
\begin{aligned}
Q_d &= diag\left(\sigma_d^2(1) \quad \sigma_d^2(2) \quad \cdots \quad \sigma_d^2(n_d)\right)\\
R &= diag\left(\sigma_y^2(1) \quad \sigma_y^2(2) \quad \cdots \quad \sigma_y^2(n_y)\right)\\
Q &= B_d Q_d B_d'^T
\end{aligned}
$$

\hfill (27)

The observer gain $K_{ob} = L$ is computed by solving the following implicit equations (also known as Riccati equations).

$$L = \left(A_p P C_p^T\right)\left(R + C_p P C_p^T\right)^{-1} \hspace{1cm} (28)$$

$$P = A_p P A_p^T + Q - L C_p P A_p^T \hspace{1cm} (29)$$

where P represents covariance of the estimation error.

The Riccati equation is an interesting nonlinear ordinary differential equation of first order since it is related to ordinary homogeneous differential equations of the second order.

The above describes the design of a multivariable model-based controller MPC for automatic gauge control (AGC). The controller is capable of using all the four actuators (roll gap, roll force, entry tension, and mill speed) simultaneously to achieve better control. The AGC MPC, using disturbance measurement, improves model predictions and thus results in better thickness control.

MPC for Automatic Flatness Control

MPC controller for AFC is derived along similar lines. Let us consider that the sheet has N active/used rotors/zones. Accordingly, there will be N cooling spray nozzles. There will be total (N+2) actuators; target value of the differential gap (tilt control), difference between positive and negative bend PV (bend control) and spray duty cycle for each spray nozzle. In order to model dynamic response of the flatness profile, instantaneous flatness profile is decomposed into linear and quadratic components. The corresponding tilt model is given below.

$$G_t = \frac{a_1(s)}{u_t(s)} = \frac{72}{0.5s + 1}e^{-s} \tag{20}$$

Here output $a_1$ represents deviation in the coefficient of linear component and $u_t$ represents deviation in differential gap. Along similar lines, the bend model is given below.

$$G_b = \frac{a_2(s)}{u_b(s)} = \frac{0.414}{7.685s + 1} \tag{21}$$

Here output $a_2$ represents deviation in the coefficient of quadratic component and $u_b$ represents deviation in difference between positive and negative bend PV. While the bending and titling models capture effect over the entire sheet, nozzle model is local and is given below.

$$G_n = \frac{r_i(s)}{u_{n,i}(s)} = \frac{0.0535}{7.684s + 1}e^{-4s} \tag{22}$$

Here $r_i$ captures deviation in shape-I value at the $i^{th}$ location and $u_{n,i}$ represents deviation in the spray duty cycle for that location. This same model is used for all the active zones. Similar to the AGC case, the deadtime in tilt and nozzle model are approximated using Pade's formula. Subsequently, the models are discretized and converted into a state space form. These (N+2) state-space models are then combined together to get a master state space model of the form of Eq. (7). Note that while u was scalar (one dimensional vector) in AGC, it is now a vector with (N+2) inputs. Accordingly, dimensions of $x$, $A_p$, $B_p$ and $C_p$ are also different. The rest of the controller design procedure is similar to AGC. There will be $4(N+2)$ constraints, *i.e.,* 4 constraints for each input, and are configured the same way as AGC.

Mill data, such as the number of rotors used (active or covered by sheet) as well as duty cycle in seconds is specified. While the former sets the dimension of the problem, the latter is used as controller execution frequency. The desired/target shape can be entered in terms of linear and quadratic components. For example, for flat profile, these components would be set to 0. The starting/initial profile (Shape-I values) need to be considered from actual data. This is termed as raw data. It is converted into zero mean data which is compared with the target shape (which is also zero mean) to compute the overall control effort required from the AFC system. Next, this required control effort is decomposed into linear and quadratic components. In a default setting, linear component control will be addressed through tilt control, quadratic component control through bend control and the residual effort will be regulated through nozzle control. However, there are two settings to modify this. There is an option to turn off tilt and/or bend control action completely. In this setting, that portion of the control effort is transferred to nozzle control. Secondly, each of the tilt, bend or nozzle control effort has a lower (dead band) and upper (clamping) bound. Based on these, the final tilt, bend and nozzle targets (for each nozzle) are computed and passed to the MPC as set points $R_s$. Note that the calculation for MPC are performed only once during a duty cycle and the inputs are held constant throughout this time.

The inventive process may be incorporated into a plant, such as, a cold rolling mill system, including those with automatic gauge and flatness control and hydraulic gap control (HGC) controllers to improve the thickness and flatness accuracy of sheets produced. The mill may include output from a controller. The controller may include input from sensors and a filter that may include various models by integration of an inventive method, such as, in a MATLAB script or in another suitable program into the controller environment.

Fig. 8 shows an embodiment of the present claimed invention comprising an internal mill model 800 of a rolling process of a material as follows:

In block 810, the mill model estimates process parameters during rolling by taking measurements.

In block 820, the mill model emulates the rolling process and predicts thickness and flatness of the material in roll gap.

In block 830, the mill model determines an optimal controller output, designated a manipulated variable, which is independent of dead times and dynamic delays in the process.

In block 840, the mill model uses a process model and computes a manipulated variable profile that optimizes a performance objective predicted over a future time interval, subject to constraints.

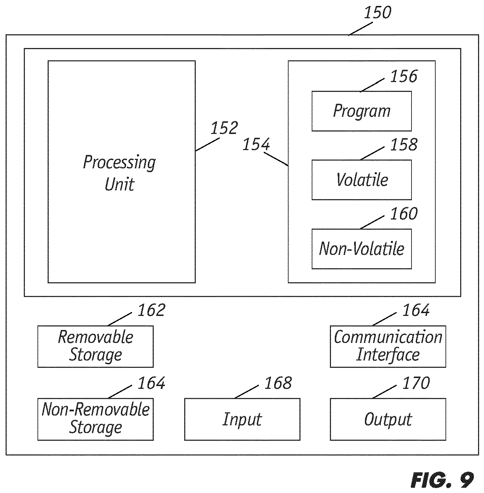

Fig. 9 is a block schematic diagram of a computer system 150 to implement an apparatus comprising a model-based multi-variable predictive controller and methods according to example embodiments. Not all components need to be used in various embodiments. One example computing device in the form of the computer system 150, may include a processing unit 152, a memory 154, a removable storage 162, and a non-removable storage 164. Although the example computing device is illustrated and described as the computer system 150, the computing device may be in different forms in different embodiments. For example, the computing device may instead be a smartphone, a tablet, a smartwatch, or other computing devices. Devices such as smartphones, tablets, and smartwatches are generally collectively referred to as mobile devices. Furthermore, although the various data storage elements are illustrated as part of the computer system 150, the storage may also, or alternatively, include cloud-based storage accessible via a network, such as the Internet.

The memory 154 may include a volatile memory 158 and a non-volatile memory 160. The computer system 150 may include-or have access to a computing environment that includes-a variety of computer-readable media, such as the volatile memory 158 and the non-volatile memory 160, the removable storage 162 and the non-removable storage 164. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage, or other magnetic storage devices capable of storing computer-readable instructions for execution to perform functions described herein.

The computer system 150 may include, or have access to, a computing environment that includes an input 168, an output 170, and a communication interface 164. The output 170 may include a display device, such as a touchscreen, that also may serve as an input device. The input 168 may include one or more of a touchscreen, touchpad, mouse, keyboard, camera, one or more device-specific buttons, one or more sensors integrated within, or coupled via, wired or wireless data connections to the computer system 150, and other input devices 168. The computer system 150 may operate in a networked environment using a communication connection to connect to one or more remote computers, such as database servers, including cloud-based servers and storage. The remote computer may include a personal computer (PC), server, router, network PC, a peer device or other common network node, or the like. The communication connection may include a Local Area Network (LAN), a Wide Area Network (WAN), cellular, WiFi, Bluetooth, or other networks.

Computer-readable instructions stored on a computer-readable storage device are executable by the processing unit 152 of the computer system 150. A hard drive. CD-ROM, and RAM are some examples of articles including a non-transitory computer-readable medium such as a storage device. The terms computer-readable medium and storage device do not include carrier waves. For example, a computer program 156 may be used to cause the processing unit 152 to perform one or more methods or described herein.

The foregoing has described the principles, preferred embodiments and modes of operation of the present invention. However, the invention should not be construed as being limited to the particular embodiments discussed. Thus, the above-described embodiments should be considered as illustrative rather than restrictive, and it should be appreciated that variations may be made in those embodiments by workers skilled in the art without departing from the scope of the present invention as defined by the following claims.

## Claims

1. A controller for controlling thickness and flatness of sheet metal in a mill exiting a roll stand comprising a first work roll and a second work roll respectively positioned between a first back up roll and a second back up roll, the controller comprising a processor and code stored on media readable by the processor to control the thickness of the sheet metal, the controller comprising:

   an input comprising the thickness and the flatness of the sheet metal;
   a model of the roll stand;
   a filter based on the model; and
   a controller output coupled to control a roll gap between the first work roll and the second a work roll, a roll force, a mill speed and/or strip tension to produce the sheet metal.

2. The controller of claim 1 wherein the filter comprises an Extended Kalman Filter.

3. The controller of claim 1 wherein the model comprises roll gap, roll force, entry tension, mill speed, spray parameters, tilt control, and bending control.

4. The controller of claim 1 wherein the model is identified by employing a bump test of the roll stand.

5. A method of programming a controller for automatically controlling thickness and flatness of sheet metal produced by a roll stand, the method comprising:

generating a model of the roll stand, the model being multivariable and predictive;
receiving input comprising variations in the thickness and flatness of the sheet metal;
generating a filter based on the model; and
automatically adjusting parameters of the filter based on the input to control of the thickness and flatness of the sheet metal produced by the roll stand.

6. The method of claim 5 wherein the filter is an Extended Kalman Filter.

7. The method of claim 5 wherein the model comprises roll gap, roll force, entry tension, mill speed, spray parameters, tilt control, and bending control.

8. The method of claim 5 wherein the model is identified by employing a bump test of the roll stand.

9. A controller for controlling thickness and flatness of sheet metal exiting a roll stand having a first work roll and a second work roll comprising:

a processor;
means of determining the thickness of the sheet metal exiting the roll stand;
means of determining the flatness of the sheet metal exiting the roll stand;
a memory device coupled to the processor and comprising a readable program for execution by the processor to:

receive an input comprising variations in the thickness and flatness of the sheet metal;
generate a model of the roll stand;
execute a filter based on the model; and
provide an output coupled to control a roll gap between the first work roll and the second a work roll, a roll force, a mill speed and/or a strip tension.

10. The controller of claim 9 wherein the filter is an Extended Kalman Filter.

11. The controller of claim 9 wherein the filter employs a second order Padé approximation for dead time.

12. The controller of claim 9 coupled to spray nozzles in different rotors/zones in a shapemeter.

13. The controller of claim 12 comprising variable duty cycle of the spray nozzles.

14. The controller of claim 9 comprising:

a linear component control addressed through tilt control,
a quadratic component control addressed through bend control, and
a residual effort regulated through nozzle control.

15. The controller of claim 14 comprising a desired or target shape entered in terms of linear and quadratic components.

Backup Roll

2 →

Unwind
(payoff) Reel

5

Work Roll
(driven)

4

C-FRAME/X-RAY
THICKNESS SENSOR

8

16

3 →

10

12

1

Speed Output

6

14

Rewind Reel

Payoff
Tension
Output

Gap Output

18

AGC
System

Thickness Measurement

Thickness Target

**FIG. 1**

46

Hydraulic screwdown
cylinder

24

Thickness
gauge

Thickness
gauge

22

28

11

40

30

36

13

15

32

Unwinder

26

Rewinder

34

Reel motor
current
control

44

Automatic
gauge control

38

42

Reel motor
current
control

Roll position AGC

**FIG. 2**

**FIG. 3**

**FIG. 4**

Upper Backup Roll (90)

Upper
Work Roll (94)

Roll bend
jacks (98)

Lower
Work
Roll
(96)

Work rolls
driven from
main drive
gearbox

Lower Backup Roll (92)

Hydraulic
Cylinders
(100)

**FIG. 5**

disturbances

objective
max ∑ productivity

input

mill

output

$\dot{x} = f(x,u,d)$
model

constraints
$x_{min} \leq x \leq x_{max}$

142

144

observer

controller

140

state/information

**FIG. 6**

Exit Thickness
Target

Entry Thickness

Disturbances

Exit Thickness
Feedback

+

−

Model-Based
Multivariable
Predictive Control
(AGC)

130

Roll Gap/
Roll force

Mill Speed/
Strip Tension

Rolling Mill

132

Constraints

**FIG. 7**

800

| |
|---|
| Mill model estimates process parameters during rolling by taking measurements |

810

| |
|---|
| Mill model emulates the rolling process and predicts thickness and flatness of the material in roll gap |

820

| |
|---|
| Mill model determines an optimal controller output, designated a manipulated variable, which is independent of dead times and dynamic delays in the process |

830

| |
|---|
| Mill model uses a process model and computes a manipulated variable profile that optimizes a performance objective predicted over a future time interval, subject to constraints |

840

**FIG. 8**

_150_

_156_

Program

_152_    _154_

Processing
Unit

_158_

Volatile

_160_

Non-Volatile

_162_

Removable
Storage

_164_

Communication
Interface

_164_

Non-Removable
Storage

_168_

Input

_170_

Output

**FIG. 9**

Europäisches
Patentamt
European
Patent Office
Office européen
des brevets

# EUROPEAN SEARCH REPORT

Application Number

EP 24 17 7436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/139290 A1 (BRITANIK RICHARD [US] ET AL) 4 June 2009 (2009-06-04)<br>* paragraph [0065] - paragraph [0067] *<br>* paragraph [0075] - paragraph [0094] *<br>* paragraph [0102] - paragraph [0105] *<br>- - - - - | 1-15 | INV.<br>B21B37/16<br>B21B37/28<br><br>ADD.<br>B21B38/02 |
| X | EP 3 426 418 B1 (NOVELIS INC [US]) 18 November 2020 (2020-11-18)<br>* paragraph [0018] - paragraph [0027] *<br>* paragraph [0036] *<br>* paragraph [0077] *<br>- - - - - | 1-15 | B21B38/04<br>B23Q15/12 |
| X | BILKHU T S ET AL: "DYNAMIC CONTROL OF TENSION, THICKNESS AND FLATNESS FOR A TANDEM COLD MILL",<br>AISE STEEL TECHNOLOGY, AISE, PITTSBURG, PA, US,<br>vol. 78, no. 10,<br>1 October 2001 (2001-10-01), pages 49-54, XP001111117,<br>ISSN: 0021-1559<br>* page 48 - page 53 *<br>- - - - - | 1-15 | |
| T | ALLWOOD J M ET AL: "Closed-loop control of product properties in metal forming", CIRP ANNALS, ELSEVIER BV, NL, CH, FR,<br>vol. 65, no. 2, 25 July 2016 (2016-07-25), pages 573-596, XP029690810,<br>ISSN: 0007-8506, DOI:<br>10.1016/J.CIRP.2016.06.002<br>* 2.2- 2.3 *<br>* 3.6- 3.8 *<br>* 7.4 *<br>- - - - - | 2-4 | TECHNICAL FIELDS SEARCHED (IPC)<br><br>B21B<br>B23Q<br>G05B |

The present search report has been drawn up for all claims

| Place of search | Date of completion of the search | Examiner |
|---|---|---|
| The Hague | 23 October 2024 | De Porcellinis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**   EP 24 17 7436

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2024

| Patent document cited in search report | Publication date | Patent family member(s) | | Publication date |
|---|---|---|---|---|
| US 2009139290 A1 | 04-06-2009 | US | 2009139290 A1 | 04-06-2009 |
| | | US | 2012240651 A1 | 27-09-2012 |
| EP 3426418 B1 | 18-11-2020 | BR | 112018067928 A2 | 02-01-2019 |
| | | CA | 3016699 A1 | 14-09-2017 |
| | | CA | 3123561 A1 | 14-09-2017 |
| | | CN | 108698098 A | 23-10-2018 |
| | | EP | 3426418 A1 | 16-01-2019 |
| | | ES | 2839698 T3 | 05-07-2021 |
| | | JP | 6838083 B2 | 03-03-2021 |
| | | JP | 2019510643 A | 18-04-2019 |
| | | KR | 20180120226 A | 05-11-2018 |
| | | US | 2017259313 A1 | 14-09-2017 |
| | | US | 2021220885 A1 | 22-07-2021 |
| | | WO | 2017156122 A1 | 14-09-2017 |

For more details about this annex : see Official Journal of the European Patent Office, No. 12/82

EPO FORM P0459